# EUROPÄISCHE PATENTSCHRIFT

(11) **EP 2 886 323 B1**
(45) Veröffentlichungstag und Bekanntmachung des Hinweises auf die Patenterteilung: **13.04.2016**
(21) Anmeldenummer: 13199265.3
(22) Anmeldetag: 22.12.2013
(51) Int. Cl.: B32B 5/02, B32B 5/24, B32B 7/12, B32B 3/26, D06N 3/00, D06N 3/14

(54) **Atmungsaktiver Mikrofaser-Textilverbund**
Breathable microfibre textile composite
Composite textile en microfibre respirant

(43) Veröffentlichungstag der Anmeldung: 24.06.2015
(73) Patentinhaber: Eurotex GmbH, 33729 Bielefeld (DE)
(72) Erfinder: Snelders, Johannes Henrikus Petrus, 33617 Bielefeld (DE)
(74) Vertreter: Wickord, Wiro

(56) Entgegenhaltungen:
- EP-A1- 2 199 080
- DE-A1-102008 000 419
- DE-A1-102012 011 221
- DE-U1- 20 318 306
- Hatice Kübra Kaynak ET AL: "Polyester Microfilament Woven Fabrics" In: "Woven Fabrics", 16. Mai 2012 (2012-05-16), InTech, Rijeka/Shanghai, XP055117139, ISBN: 978-9-53-510607-4 Seiten 155-178, * das ganze Dokument *

## Beschreibung

Die Erfindung betrifft einen Mikrofaser-Textilverbund, umfassend ein Basisgewebe, bestehend aus einer Trägerschicht als Gewebe, Gewirke oder Vlies aus synthetischen und/oder natürlichen Materialien und einer auf eine Oberfläche der Trägerschicht angeordnete Schaumschicht auf der Basis von Polyurethanschaum, sowie eine auf der freien Oberfläche der Schaumschicht mittels Klebstoff kaschierten Deckschicht aus Mikrofasergewebe, das wasserdampfdurchlässig ist.

Der Einsatz von Textilverbünden mit Polyurethanschaum ist als Polsterbezug von Polstermöbeln bekannt. In der Regel ist bei diesen Textilverbünden ein textiles Gewebe oder Vliesstoff als Trägermaterial mit einer Beschichtung aus Polyurethan verbunden. Anschließend erhält das Polyurethan eine Schaumstruktur im Koagulationsverfahren. Auf das so entstandene Basisgewebe wird nun ein Film auf Basis eines lösemittelhaltigen Polyurethanharzes aufgebracht, damit dieses das gewünschte Aussehen und die gewünschte Struktur erhält. Dieser Film bedeckt die Oberfläche des Verbundes vollständig und reduziert somit die Atmungsaktivität des Textilverbundes erheblich.

Aus diesem Grund sieht ein Mikrofaser-Textilverbund die Kaschierung der freien Oberfläche der Schaumschicht mit einem Mikrofasergewebe vor, wie es in der Anmeldung "Mikrofaser-Textilverbund" des Anmelders beschrieben wird. Dabei weist der Mikrofaser-Textilverbund eine Deckschicht aus Mikrofasergewebe auf, die auf eine mit Polyurethanschaum beschichtete textile Trägerschicht kaschiert ist. Das Mikrofasergewebe ist atmungsaktiv, wodurch es besonders für den Einsatz in Sitz- und Liegemöbeln geeignet ist. Durch eine geeignete Weiterbildung lässt sich die Atmungsaktivität durch alle Schichten des Mikrofaser-Textilverbunds sicherstellen, insbesondere durch die Polyurethan-Schaumschicht.

Andererseits sind in der DE 102012011 221 A1 ein Textilverbund und sein Herstellungsverfahren beschrieben, der als Sitzbezug im Fahrzeugbereich eingesetzt wird. Dieser Textilverbund umfasst eine Deckschicht aus einem folienartigen Kunststoffmaterial, die auf einem textilen Trägermaterial aufgebracht ist. Durch eine Perforierung des Kunststoffmaterials werden durchgängige Poren im Kunststoffmaterial zum Gasaustritt erzeugt. Danach wird das Kunststoffmaterial mit dem textilen Trägermaterial und/oder weiteren Schichten von weiteren Textilmaterialien verbunden. Bei diesem Verfahren entsteht eine Durchstoßung der sichtbaren Oberfläche des Textilverbundes, wodurch die Oberfläche des Textilverbundes aber auch empfindlicher wird, denn die Bereiche rund um die Öffnungen im Textilverbund neigen zu Anschmutzungen. Darüber hinaus ist diese Perforation auch empfindlich gegen starke Durchnässung, so dass bei der Reinigung und Pflege eine besondere Vorgehensweise einzuhalten ist, um die Löcher der Perforation nicht mit dem Pflegemittel zu füllen oder zu nässen. Die Feuchtigkeit dringt sonst ein und kann die Ränder der Löcher aufquellen lassen, was dann nicht schön aussieht.

In der DE 20 2011 004 994 U1 ist ein Verbundmaterial offenbart, der in Form von Kraftfahrzeug Innenverkleidungen, Autohimmeln und anderem eingesetzt wird. Das Verbundmaterial umfasst eine Oberschicht, die mit einer Zwischenschicht auf einer Trägerschicht aufgebracht ist. Dabei ist die Oberschicht mit durchgehenden Kapillarengefertigt, die die Oberschicht und gegebenenfalls die Zwischenschicht durchdringen und in den offenen Zellen des Polyurethanschaums enden. Bei dieser Ausführung entsteht durch die Kapillare eine Durchstoßung der sichtbaren Oberfläche des Verbundmaterials. Wie bereits detailliert beschrieben, wird hierdurch das Verbundmaterial empfindlich gegen Durchnässung und Anschmutzung.

In der WO 2012/116936 A1 ist eine Nadelvorrichtung mit einem Nadelbett beschrieben, an welchem eine Vielzahl von mit Spitzen versehenen Nadelelementen in leistenartigen Nadelträgern eingesetzt sind, die ihrerseits am bzw. im Nadelbett befestigt sind. Hierdurch sind die Nadelelemente einfach montierbar und abgenutzte Nadelelemente sind einfach und schnell austauschbar. Diese Vorrichtung ist besonders für das Fibrillieren von Kunststofffolien aus Polyethylen oder Polypropylen geeignet. Die Ausgestaltung der Nadelelemente als ebenes Plättchen mit Schneiden ist hingegen für die Durchstoßung des mit Polyurethanschaum beschichteten textilen Trägermaterials wesentlich ungeeigneter als herkömmliche Rundnadeln.

Perforationen werden heute fast ausschließlich im Fahrzeugbereich eingesetzt, im Schuh-, Taschen und Bekleidungsbereich werden Perforationen eher aus dekorativen Gründen eingesetzt. Im Möbelbereich kommen Perforationen derzeit gar nicht vor.

Der Erfindung liegt die Aufgabe zugrunde, einen Textilverbund der eingangs genannten Art mit einem Basisgewebe herzustellen, das wasserdampfdurchlässig ist und die Feuchtigkeit schnell vom Körper wegbringt. Darüber hinaus ist der Textilverbund verschleißfester, geruchlos, frei von schädlichen Lösemitteln, kostengünstig und kontinuierlich als Rollenware herstellbar und hat eine gute Weiterverarbeitbarkeit.

Diese Aufgabe wird durch die Merkmale des Anspruchs 1 und ein Verfahren gemäß Anspruch 8 gelöst. Die Verwendung ist in Anspruch 11 angegeben. Ausführungsformen der Erfindung sind in den Unteransprüchen beschrieben.

Die Aufgabe wird erfindungsgemäß dadurch gelöst, dass der atmungsaktive Mikrofaser-Textilverbund in der Schicht des Basisgewebes durchgängige Poren aufweist. Dabei durchstoßen die Poren sowohl die Trägerschicht als auch die Schaumschicht in regelmäßigen Abständen. Auf das Basisgewebe wird mittels Klebstoff eine Deckschicht aus Mikrofasergewebe kaschiert, das wasserdampfdurchlässig ist. Aus diesem Grund erhält der Mikrofaser-Textilverbund trotz der kaschierten Deckschicht durch die Vielzahl der Poren seine Atmungsaktivität, wodurch Feuchtigkeit, wie beispielsweise Körperschweiß und Körperfeuchtigkeit, besser von der Oberfläche des Textilverbunds abgeleitet wird. Demzufolge wird die Feuchtigkeit schneller und aktiv vom Körper weggebracht, so dass die Haut trocken bleibt. Die Deckschicht aus Mikrofasergewebe ist nicht perforiert, jedoch liegen im Mikrofasergewebe die Mikrofasern so dicht aufeinander, dass es für Wasserdampf durchlässig ist. Gleichzeitig schwitzt man nicht mehr auf dem atmungsaktiven Mikrofaser-Textilverbund, wodurch er besonders für den Einsatz in Sitz- und Liegemöbeln geeignet ist.

Darüber hinaus ist das Mikrofasergewebe wasserdicht, da die Mikrofasern im Mikrofasergewebe so dicht aufeinander liegen, dass zwar Wasserdampfmoleküle hindurch können, aber gleichzeitig kleine Wassertröpfchen nicht hinein können. Das ist eine nahezu perfekte Schutz für die darunter liegenden Poren des Basisgewebes, die empfindlich gegen starke Durchnässung sind. Besonders vorteilhaft vereinfacht sich dadurch die Reinigung und Pflege des atmungsaktiven Mikrofaser-Textilverbunds, da die Poren jetzt nicht mehr mit dem Pflegemittel gefüllt oder genässt werden können. Darüber hinaus kann es nicht mehr zu unschönen Anschmutzungen der Porenöffnungen kommen, da die Poren nicht mehr die sichtbare Oberfläche des Textilverbundes durchstoßen.

Das erfindungsgemäße Verfahren zur Herstellung des atmungsaktiven Mikrofaser-Textilverbunds sieht vor, zunächst das Basisgewebe zu perforieren. In einem zweiten Schritt wird die Deckschicht mit Hilfe des Klebstoffs auf die Schaumschicht des Basisgewebes kaschiert. Durch die Kaschierung erhält man einen Mikrofaser-Textilverbund, der eine besondere Atmungsaktivität aufweist. Als Folge des Kaschiervorgangs geht die Gesamtdicke des Mikrofaser-Textilverbunds zurück.

Das Perforieren des Basisgewebes erfolgt über eine stachelbesetzte Walze oder einen stachelbesetzten Stempel, wobei das zu perforierende Basisgewebe in einen zwischen der stachelbesetzten Walze bzw. Stempel und einem Gegenlager gebildeten Arbeitsspalt eingeführt ist. Durch die Perforierung werden etwa dem Porenvolumen entsprechende Materialmengen aus der Schaum- und Trägerschicht ausgestanzt und entfernt. Alternativ kann die Perforierung auch durch einen Laserstrahl, Wasserstrahl oder Energiestrahl erfolgen, wobei für jede Pore in an sich bekannter Weise die Einwirkungsdauer, der Querschnitt und der Lichtstrom, Wasserdruck bzw. Energiestrom des Laserstrahls, Wasserstrahls bzw. Energiestrahls so gewählt werden, dass an seiner Einwirkungsstelle ein etwa dem Porenvolumen entsprechende Materialmenge vollständig abgetragen wird.

Eine vorteilhafte Weiterbildung des erfindungsgemäßen atmungsaktiven Mikrofaser-Textilverbunds sieht vor, dass die Deckschicht zusätzlich eine Aufbauschicht aus Vliesstoff umfasst. Bei dem Vliesstoff handelt es sich um ein Flächengebilde aus Textilfasern, die durch verschiedene Verfahren Flore bzw. Filamente bilden, die in physikalischen oder chemischen Verfahren verfestigt werden. Der Vliesstoff ist nicht perforiert, jedoch ist er durch seine Beschaffenheit wasserdampfdurchlässig. Der Vliesstoff ist unterhalb des Mikrofasergewebes mittels des Klebstoffs kaschiert, um dem atmungsaktiven Mikrofaser-Textilverbund eine Schubelastizität zu geben. Die Schubelastizität kann Relativbewegungen zwischen dem Mikrofasergewebe und der Trägerschicht ausgleichen.

Bei dem Klebstoff kann vorzugsweise ein Polyurethan-Schmelzklebstoff oder ein Kontaktklebstoff auf Wasserbasis eingesetzt werden, der punktweise auf eine Seite bzw. beide Seiten der Klebstelle aufgetragen wird und beide Seiten der Klebestelle durch Druck eine Klebereaktion eingehen, wobei eine Wärmeaktivierung hilfreich ist. Durch die punktweise Struktur der Klebestellen zwischen der Deckschicht und dem Basisgewebe kann der Wasserdampf ungehindert durch das Mikrofasergewebe und durch die Poren hindurch treten.

Eine Ausführungsform des atmungsaktiven Mikrofaser-Textilverbunds weist im Basisgewebe durchgängige Poren in regelmäßigen Abständen auf. Dabei weisen die Poren einen Durchmesser zwischen 0,8 mm und 8,0 mm und einen Abstand zueinander zwischen 6,0 mm x 6,4 mm und 30,0 mm x 50,0 mm auf. In einer bevorzugten Ausführungsform des atmungsaktiven Mikrofaser-Textilverbunds weisen die Poren einen Durchmesser von 0,8 mm und einen Abstand zueinander von 6,0 mm x 6,4 mm auf. Der Polyurethanschaum liegt in einer Stärke von 0,55 mm vor. Weiterhin verfügt die textile Trägerschicht über eine Dicke zwischen 0,52 mm und 0,56 mm.

Gegenstand der Erfindung ist auch die Verwendung des oben beschriebenen atmungsaktiven Mikrofaser-Textilverbunds als Polsterbezug für Sitz- und Liegemöbel, wobei der Polsterbezug das Füllmaterial für die Federung, Isolierung oder Wattierung an diesen Möbeln bedeckt. Zum Beispiel bezieht man einen Sessel, eine Couch oder eine gepolsterte Sitzfläche an Stühlen mit einem Polsterbezug. Des Weiteren wird dieser atmungsaktive Mikrofaser-Textilverbund auch als Bezug von Kissen eingesetzt, wo er mit Farben und Struktur entscheidend zum Ambiente des Raums beiträgt und gleichzeitig den persönlichen Stil widerspiegelt.

Die Erfindung ist nachfolgend anhand von bevorzugten Ausführungsbeispielen unter Bezugnahme auf die Abbildungen beispielhaft erläutert. Dabei zeigt schematisch:
Fig. 1 den Aufbau der bevorzugten Ausführungsform des erfindungsgemäßen atmungsaktiven Mikrofaser-Textilverbunds im Querschnitt,
Fig. 2 den Aufbau einer Weiterbildung des erfindungsgemäßen atmungsaktiven Mikrofaser-Textilverbunds im Querschnitt,
Fig. 3 das Ablaufdiagramm des Verfahrens zur Herstellung des atmungsaktiven Mikrofaser-Textilverbunds.

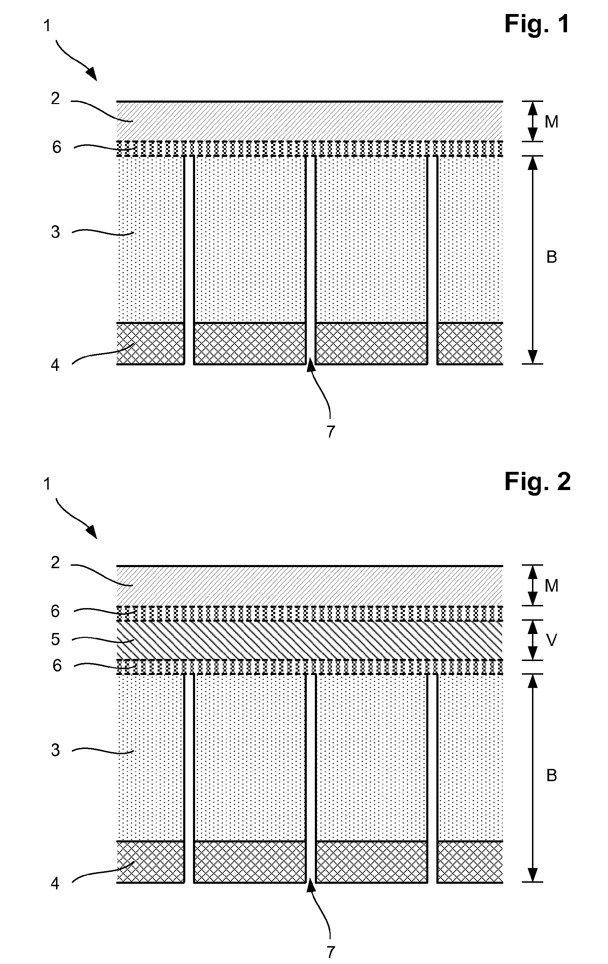

Fig. 1 zeigt schematisch den Aufbau der bevorzugten Ausführungsform des erfindungsgemäßen atmungsaktiven Mikrofaser-Textilverbunds 1 im Querschnitt. Der atmungsaktive Mikrofaser-Textilverbund 1 besteht aus einer Deckschicht 2 aus Mikrofasergewebe M und einem Basisgewebe B, das aus einer Trägerschicht 4 und einer Schaumschicht 3 zusammengesetzt ist.

Dabei durchragen Poren 7 in regelmäßigen Abständen die Trägerschicht 4 und die Schaumschicht 3 des Basisgewebes B. Das Mikrofasergewebe M ist mit dem Klebstoff 6 auf dem Basisgewebe B kaschiert, wobei der Klebstoff 6 punktweise aufgetragen ist. Dadurch kann Wasserdampf bzw. Hautschweiß ungehindert vom Mikrofasergewebe M, das wasserdampfdurchlässig ist, durch die Poren 7 treten. Der Hautschweiß wird dadurch besser abgeleitet und der Mikrofaser-Textilverbund 1 erhält seine Atmungsaktivität.

Fig. 2 zeigt schematisch den Aufbau einer Weiterbildung des erfindungsgemäßen atmungsaktiven Mikrofaser-Textilverbunds 1 im Querschnitt. Dabei besteht der atmungsaktive Mikrofaser-Textilverbund 1 aus einer Deckschicht 2 aus Mikrofasergewebe M und einer Aufbauschicht 5 aus Vliesstoff V sowie einem Basisgewebe B, das aus einer Trägerschicht 4 und einer Schaumschicht 3 zusammengesetzt ist.

Die Poren 7 durchragen in regelmäßigen Abständen die Trägerschicht 4 und die Schaumschicht 3 des Basisgewebes B. Der Vliesstoff V ist mit dem Klebstoff 6 auf dem Basisgewebe B kaschiert, und das Mikrofasergewebe M ist wiederum mit dem Klebstoff 6 auf dem Vliesstoff V kaschiert, wobei der Klebstoff 6 jeweils punktweise aufgetragen ist. Dadurch kann Wasserdampf bzw. Hautschweiß ungehindert vom Mikrofasergewebe M, das wasserdampfdurchlässig ist, sowie durch den Vliesstoff V, der gleichfalls wasserdampfdurchlässig ist, durch die Poren 7 treten. Der Hautschweiß wird dadurch besser abgeleitet und der Mikrofaser-Textilverbund 1 erhält seine Atmungsaktivität.

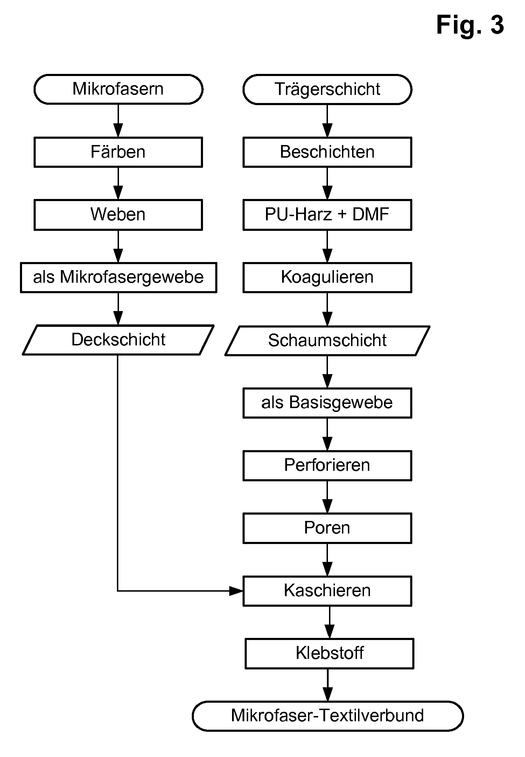

Der erfindungsgemäße atmungsaktive Mikrofaser-Textilverbund 1 wird mit dem im schematischen Ablaufdiagramm der Fig. 3 dargestellten Verfahren hergestellt.

Die Deckschicht 2 wird durch Weben von Mikrofasern derart gebildet, dass Kettfäden und Schussfäden rechtwinklig miteinander verkreuzt werden. Hierdurch entsteht das Mikrofasergewebe M, das durch Färben der Fasern oder des Gewebes seine gewünschte Farbe erhält.

Das Basisgewebe B wird im Koagulationsverfahren, auch DMF-Koagulation oder wet process genannt, gebildet. In diesem Verfahren wird die textile Trägerschicht 4 mit einer pastösen Lösung von Polyurethanharz in Dimethylformamid (DMF) entweder durch Tauchung oder Rakeln beschichtet. Anschließend wird die beschichtete Trägerschicht 4 durch mehrere nachfolgende, im Gegenstrom laufende Wasserbäder geführt. Dabei löst sich das Lösungsmittel DMF in der wässrigen Phase und das Polyurethanharz, da unlöslich in Wasser, bleibt als offenporige Schaumschicht 3 auf der textilen Trägerschicht 4 zurück.

Anschließend wird das Basisgewebe B beispielsweise mittels einer stachelbesetzten Walze oder eines stachelbesetzten Stempels perforiert, wodurch die Poren in der Schaumschicht 3 und Trägerschicht 4 erzeugt werden. Danach werden die Deckschicht 2 und das Basisgewebe B kaschiert bzw. den Klebstoff 6 punktweise miteinander verbunden.

Der so erhaltene atmungsaktive Mikrofaser-Textilverbund 1 weist den in Fig. 1 dargestellten Aufbau auf.

Die Weiterbildung des erfindungsgemäßen atmungsaktiven Mikrofaser-Textilverbunds 1 schließt das Bilden der Aufbauschicht 5 ein, die durch Bilden eines Flächengebildes, wie beispielsweise Faserflor oder Filamentflor, aus Textilfasern und dessen mechanische, thermische oder chemische Verfestigung zu einem Vliesstoff V gebildet wird.

Nachfolgend wird die Aufbauschicht 5 aus Vliesstoff V unterhalb des Mikrofasergewebes M mittels des Klebstoffs 6 kaschiert.

Der atmungsaktive Textilverbund 1 mit einer zusätzlichen Aufbauschicht 5 weist den in Fig. 2 dargestellten Aufbau auf.

### Bezugszeichen

- 1: Mikrofaser-Textilverbund
- 2: Deckschicht
- 3: Schaumschicht
- 4: Trägerschicht
- 5: Aufbauschicht
- 6: Klebstoff
- 7: Pore
- B: Basisgewebe
- M: Mikrofasergewebe
- V: Vliesstoff

## Patentansprüche

1. Mikrofaser-Textilverbund (1), umfassend ein Basisgewebe (B), bestehend aus einer Trägerschicht (4) als Gewebe, Gewirke oder Vlies aus synthetischen und/oder natürlichen Materialien und einer auf eine Oberfläche der Trägerschicht angeordnete Schaumschicht (3) auf der Basis von Polyurethanschaum, sowie eine auf der freien Oberfläche der Schaumschicht mittels Klebstoff (6) kaschierten Deckschicht (2) aus Mikrofasergewebe (M), das wasserdampfdurchlässig ist,
**dadurch gekennzeichnet,**
**dass** der Mikrofaser-Textilverbund (1) in der Schicht des Basisgewebes (B) durchgängige Poren (7) in regelmäßigen Abständen zum Wasserdampfdurchtritt aufweist, damit der Mikrofaser-Textilverbund (1) seine Atmungsaktivität erhält.

2. Mikrofaser-Textilverbund (1) nach Anspruch 1, **dadurch gekennzeichnet,**
**dass** die Poren (6) des Basisgewebes (B) einen Durchmesser zwischen 0,8 mm und 8,0 mm aufweisen.

3. Mikrofaser-Textilverbund (1) nach Anspruch 1, **dadurch gekennzeichnet,**
**dass** die Poren (6) des Basisgewebes (B) einen Abstand zwischen 6,0 mm x 6,4 mm und 30,0 mm x 50,0 mm aufweisen.

4. Mikrofaser-Textilverbund (1) nach Anspruch 1, **dadurch gekennzeichnet,**
**dass** die Deckschicht (2) zusätzlich eine Aufbauschicht (5) aus Vliesstoff (V) umfasst, die unterhalb des Mikrofasergewebes (M) mittels des Klebstoffs (6) kaschiert ist, um dem atmungsaktiven Mikrofaser-Textilverbund (1) eine Schubelastizität zu geben.

5. Mikrofaser-Textilverbund (1) nach Anspruch 1, **dadurch gekennzeichnet,**
**dass** der Klebstoff (6) punktweise aufgetragen ist, um einen ungehinderten Wasserdampfdurchtritt zu ermöglichen.

6. Mikrofaser-Textilverbund (1) nach Anspruch 1, **dadurch gekennzeichnet,**
**dass** der Polyurethanschaum (3) eine Dicke von 0,55 mm aufweist.

7. Mikrofaser-Textilverbund (1) nach Anspruch 1, **dadurch gekennzeichnet,**
**dass** die Trägerschicht (4) eine Dicke zwischen 0,52 mm und 0,56 mm aufweist.

8. Verfahren zur Herstellung des Mikrofaser-Textilverbunds (1), nach einem der vorstehenden Ansprüche, mit den Schritten:
(i) Perforieren des Basisgewebes (B) zur Erzeugung der Poren (7),
(ii) Kaschieren der Deckschicht (2) mit dem Klebstoff (6) auf das Basisgewebe (B).

9. Verfahren nach Anspruch 8, **dadurch gekennzeichnet,**
**dass** das Perforieren des Basisgewebes (B) über eine stachelbesetzte Walze oder einen stachelbesetzten Stempel erfolgt.

10. Verfahren nach Anspruch 8, **dadurch gekennzeichnet,**
**dass** das Perforieren des Basisgewebes (B) durch einen Laserstrahl, Wasserstrahl oder Energiestrahl erfolgt.

11. Verwendung des Mikrofaser-Textilverbunds (1), nach einem der vorstehenden Ansprüche, als Polsterbezug für Sitz- und Liegemöbel, sowie als Bezug von Kissen.

## Claims

1. Micro-fibre textile composite (1), comprising a base fabric (B), consisting of a carrier layer (4), in the form of a fabric, knitted fabric or non-woven fabric of synthetic and/or natural materials, and a foam layer (3), based on polyurethane foam and arranged on a surface of the carrier layer, and also comprising a cover layer (2), laminated onto the free surface of the foam layer using glue (6) and consisting of micro-fibre fabric (M) which is permeable to water vapour,
**characterised in that**
the micro-fibre textile composite (1) has continuous pores (7) at regular distances in the layer of the base fabric (B) for water vapour to pass through, in order for the micro-fibre textile composite (1) to achieve the breathability thereof.

2. Micro-fibre textile composite (1) according to claim 1, **characterised in that** the pores (6) of the base fabric (B) have a diameter between 0.8 mm and 8.0 mm.

3. Micro-fibre textile composite (1) according to claim 1, **characterised in that** the pores (6) of the base fabric (B) are at a distance between 6.0 mm x 6.4 mm and 30.0 mm x 50.0 mm.

4. Micro-fibre textile composite (1) according to claim 1, **characterised in that** the cover layer (2) additionally comprises an add-on layer (5) of non-woven material (V), which is laminated under the micro-fibre fabric (M) using the glue (6) so as to give the breathable micro-fibre textile composite (1) a shear elasticity.

5. Micro-fibre textile composite (1) according to claim 1, **characterised in that** the glue (6) is applied pointwise so as to make unimpeded passage of water vapour possible.

6. Micro-fibre textile composite (1) according to claim 1, **characterised in that** the polyurethane foam (3) has a thickness of 0.55 mm.

7. Microfibre textile composite (1) according to claim 1, **characterised in that** the carrier layer (4) has a thickness between 0.52 mm and 0.56 mm.

8. Method for manufacturing the micro-fibre textile composite (1) according to any of the preceding claims, comprising the steps of:
(i) perforating the base fabric (B) to create the pores (7),
(ii) laminating the cover layer (2) onto the base fabric (B) using the glue (6).

9. Method according to claim 8, **characterised in that**
the base fabric (B) is perforated using a barbed roller or a barbed stamp.

10. Method according to claim 8, **characterised in that**
the base fabric (B) is perforated by a laser beam, water jet or energy beam.

11. Use of the micro-fibre textile composite (1) according to any of the preceding claims as a cushion cover for furniture for sitting or lying on and as a pillow cover.

## Revendications

1. Composite textile microfibre (1), comprenant un tissu de base (B) composé d'une couche support (4), sous forme de tissu, tricot ou non-tissé en matériaux synthétiques et/ou naturels, et d'une couche de mousse (3) à base de mousse polyuréthanne qui est disposée sur une surface de la couche support, ainsi que d'une couche de finition (2) en tissu microfibre (M), qui est perméable à la vapeur d'eau et collée sur la surface libre de la couche de mousse à l'aide d'une colle (6),
**caractérisé en ce que**
le composite textile microfibre (1) présente dans la couche du tissu de base (B) des pores continus (7) à intervalles réguliers permettant le passage de la vapeur d'eau afin que le composite textile microfibre (1) préserve son activité respirante.

2. Composite textile microfibre (1) selon la revendication 1, **caractérisé en ce que** les pores (6) du tissu de base (B) présentent un diamètre compris entre 0,8 mm et 8,0 mm.

3. Composite textile microfibre (1) selon la revendication 1, **caractérisé en ce que** les pores (6) du tissu de base (B) présentent une distance entre 6,0 mm x 6,4 mm et 30,0 mm x 50,0 mm.

4. Composite textile microfibre (1) selon la revendication 1, **caractérisé en ce que** la couche de finition (2) comprend en outre une couche de structure (5) en toile non tissée (V) qui est contrecollée en dessous du tissu microfibre (M) à l'aide d'une colle (6) pour donner au composite textile microfibre respirant (1) une élasticité au cisaillement.

5. Composite textile microfibre (1) selon la revendication 1, **caractérisé en ce que** la colle (6) est appliquée par points pour permettre un passage libre de la vapeur d'eau.

6. Composite textile microfibre (1) selon la revendication 1, **caractérisé en ce que** la mousse polyuréthanne (3) présente une épaisseur de 0,55 mm.

7. Composite textile microfibre (1) selon la revendication 1, **caractérisé en ce que** la couche support (4) présente une épaisseur comprise entre 0,52 mm et 0,56 mm.

8. Procédé de fabrication du composite textile microfibre (1) selon une des revendications précédentes, comprenant les étapes consistant à :
(i) perforer le tissu de base (B) pour produire les pores (7),
(ii) contrecoller la couche de finition (2) avec la colle (6) sur le tissu de base (B).

9. Procédé selon la revendication 8, **caractérisé en ce que**
la perforation du tissu de base (B) s'effectue par l'intermédiaire d'un rouleau garni de pics ou d'un poinçon garni de pics.

10. Procédé selon la revendication 8, **caractérisé en ce que**
la perforation du tissu de base (B) s'effectue par un faisceau laser, un jet d'eau ou un faisceau d'énergie.

11. Utilisation du composite textile microfibre (1) selon une des revendications précédentes, pour servir d'enveloppe rembourrée, pour siège ou fauteuil inclinable, ainsi que d'enveloppe de coussins.
